# EUROPÄISCHE PATENTSCHRIFT

(11) **EP 1 134 131 B1**
(45) Veröffentlichungstag und Bekanntmachung des Hinweises auf die Patenterteilung: **18.01.2006**
(21) Anmeldenummer: 01104516.8
(22) Anmeldetag: 02.03.2001
(51) Int. Cl.: B60R 21/20

(54) **Lenkvorrichtung für ein Fahrzeug, insbesondere für ein Kraftfahrzeug mit einem Airbagmodul**
Vehicle steering device for a motor vehicle fitted with an airbag module
Dispositif de direction pour véhicule automobile équipé d'un module à sac gonflable

(30) Priorität: 15.03.2000 DE 10012093
(43) Veröffentlichungstag der Anmeldung: 19.09.2001
(73) Patentinhaber: Volkswagen Aktiengesellschaft, 38436 Wolfsburg (DE)
(72) Erfinder: Sinnhuber, Ruprecht, 38518 Gifhorn (DE)

(56) Entgegenhaltungen:
- DE-A- 19 726 878
- DE-A- 19 733 896
- DE-A- 19 750 182
- DE-A- 19 829 237
- DE-A- 19 855 657
- DE-A- 19 904 328
- DE-A- 19 931 815
- DE-U- 29 912 825

## Beschreibung

Die Erfindung betrifft eine Lenkvorrichtung für ein Fahrzeug, insbesondere für ein Kraftfahrzeug, mit einem Airbagmodul nach dem Oberbegriff des Anspruchs 1

Eine gattungsgemäße allgemein bekannte Lenkvorrichtung für ein Fahrzeug, insbesondere für ein Kraftfahrzeug, mit einem Airbagmodul umfaßt eine Lenksäule, die endseitig eine Lenkradnabe aufweist, an der das Lenkrad angeordnet ist. Die Lenkradnabe ist vorzugsweise topfförmig ausgebildet und umfaßt eine Austrittwand mit einer öffenbaren Abdeckung, hinter der das Airbagmodul, das einen Gasgenerator und einem Airbag umfaßt, angeordnet ist. Die Abdeckung gibt im aktivierten Zustand des Airbagmoduls eine Airbagaustrittöffnung frei, durch die hindurch der Airbag vor dem Lenkrad aufblasbar ist.

Konkret sind die Abdeckungen hier in der Art von Klappen und Deckeln ausgebildet, die durch einen gezündeten Airbag und den sich darin aufbauenden Druck an vorgekerbten Randnuten des Überzugs aufreißen und in den Fahrzeuginnenraum hineinklappen. Um unkontrollierte Flugbewegungen solcher Deckel in den Innsassenraum zu verhindern, sind auch Fangbänder allgemein bekannt, die die Klappen oder Deckel zurückhalten. Diese Art der Klappenöffnung durch den Airbag kann insbesondere in Verbindung mit durch Fangbänder zurückgehaltenen Klappen den Aufblas- und Entfaltungsvorgang in unerwünschte Weise behindern. In einer speziellen Konstruktion nach der gattungsgemäßen DE 198 29 237 A1 findet als Abdeckung ein Winkelstück Einsatz, das mit einem Schenkel die eigentliche Abdeckfunktion ausübt, dagegen mit einem anderen Schenkel parallel zur Aufblasrichtung des Airbags verschiebbar in einer Lenkeinrichtung gelagert ist. Zum Verschieben dieser Abdeckung zwischen ihrer Schließstellung und einer eine Austrittsöffnung für den Airbag freigebenden Öffnungsstellung wird ebenfalls der Gasdruck in dem expandierenden Airbag ausgenutzt.

Bei Lenkvorrichtungen handelt es sich um kompliziert aufgebaute Spezialkonstruktionen, so daß z. B. für eine Armaturentafel eines Fahrzeugs entwickelte Airbagmodule, wie sie z. B. aus den Druckschriften DE 199 31 815 A1, DE 299 12 825 U1, DE 197 26 878 A1, DE 197 50 182 A1 und DE 197 33 896 A1 bekannt sind und bei denen über einen pyrotechnisch aktivierbaren Seilzug eine Zugkraft auf eine Airbagmodul-Abdeckung zur Freigabe einer Airbagaustrittöffnung aufgebracht wird, nicht ohne weiteres auf Lenkvorrichtungen übertragbar sind. Insbesondere ist bei derartigen für eineArmaturentafel eines Fahrzeugs entwickelten Airbagmodulen zu beachten, daß hier nach hinten, d. h. zum Motorraum hin, nur wenig Raum für eine Verlagerung einzelner Bauteile vorhanden ist. Der Aufbau einer Lenkvorrichtung erfordert darüber hinaus eine äußerst kompakte Bauweise, da im Gegensatz zu einer Armaturentafel ein erheblich reduzierter Einbauraum zur Verfügung steht. Dieser Problematik tragen beispielsweise aus der zitierten DE 197 26 878 A1 bekannte, für Armaturentafeln gedachte Airbageinrichtungen nicht Rechnung, die zur Betätigung der Abdeckungen pyrotechnische Kolben-Zylinder-Anordnungen enthalten, die beispielsweise an den Stirnseiten des jeweiligen Gasgenerators befestigt sind bzw. innerhalb des Gasgenerators verlaufen. Andere dort gezeigte Konstruktionen mit zum Öffnen der Abdeckung bewegbarem Gasgenerator nutzen zum Bewegen des Gasgenerators das Aufblasen des Airbags aus, der sich an der noch nicht geöffneten Abdeckung abstützt. Derartige Konstruktionen belasten also den Airbag beim öffnungsvorgang der Abdeckung, da diese beiden Vorgänge, nämlich Öffnungsvorgang und Aufblasvorgang, zeitlich nicht getrennt sind. Wieder andere dort beschriebene Konstruktionen vermeiden zwar diesen Nachteil, jedoch auf Kosten der Notwendigkeit des Vorhandenseins einer weiteren Druckmittelquelle, d. h. beispielsweise eines weiteren Gasgenerators.

Es ist Aufgabe der Erfindung, eine Lenkvorrichtung für ein Fahrzeug, insbesondere für ein Kraftfahrzeug, mit einem Airbagmodul zu schaffen, mit der bei einer einfachen und kostengünstigen Herstellung eine funktionssichere und schnelle Öffnung der Abdeckung im Lenkradnabenbereich zur Freigabe der Airbagaustrittöffnung ohne Belastung des Airbags möglich ist.

Diese Aufgabe wird gelöst mit den Merkmalen des Anspruchs 1.

Gemäß Anspruch 1 ist auch bei der Erfindung die Abdeckung mit wenigstens einem Zugmittel verbunden, das mittels eines pyrotechnischen Antriebs betätigbar ist, wobei der pyrotechnische Antrieb als Zylinder-Kolben-Einheit ausgebildet ist. Bei dieser Zylinder-Kolben-Einheit bildet der Gasgenerator den Kolben, der in einem als Zylinder fungierenden Zylinderbereich der Lenkradnabe und/oder der Lenksäule von einer Ruhestellung in eine Bereitschaftsstellung verschiebbar gelagert ist. Das wenigstens eine Zugmittel ist mit dem Gasgenerator mittelbar und/oder unmittelbar so verbunden, daß bei einer Verlagerung des Gasgenerators in dem Zylinderbereich eine Zugkraft auf das wenigstens eine Zugmittel aufbringbar ist dergestalt, daß das Zugmittel die Abdeckung zur Freigabe der Airbagaustrittöffnung aus deren Abdeckstellung in deren Offenstellung überführt. Dabei sind dahingehende Maßnahmen getroffen, daß der Gasgenerator nach seiner Aktivierung mit dem aus ihm ausströmenden Gas bis zum Erreichen seiner Bereitschaftsstellung nur zu seiner Verlagerung und erst anschließend für das Aufblasen des Airbags verwendet wird.

Eine solche Anordnung ist einfach und kostengünstig herstellbar, da die ohnehin erforderlichen Bestandteile und Bauteile der Lenkvorrichtung und des Airbagmoduls, nämlich der in der Regel zylinderförmige Wandbereich der Lenksäule und/oder der Lenkradnabe als Zylinderbereich sowie der Gasgenerator als Kolben in einer Doppelfunktion vorteilhaft auch zur Öffnung der Abdeckung verwendet werden können. Durch eine derartige Funktionsintegration an einer Lenkvorrichtung ist auch eine zwingend erforderliche kompakte Bauweise einfach zu realisieren. Zudem ermöglicht die einfache, vorzugsweise lineare Verlagerungsbewegung des Gasgenerators einen einfachen Aufbau mit Längsführungselementen sowie eine funktionssichere und schnelle Öffnung der Abdeckung. In dieser Hinsicht vorteilhaft ist auch die Erzielung einer zeitlichen Aufeinanderfolge von Öffnen der Abdeckung und Aufblasen des Airbags allein mittels des Gasgenerators.

In einer besonders bevorzugten konkreten Ausführungsform ist das wenigstens eine Zugmittel durch den Airbag selbst gebildet, der mit wenigstens einem Airbagteilbereich so an der Abdeckung festgelegt ist, daß bei einer Verlagerung des Gasgenerators im Zylinderbereich, vorzugsweise in Richtung von der Abdeckung weg, eine Zugkraft auf den wenigstens einen Airbagteilbereich aufbringbar ist. Dadurch wird die Abdeckung in ihre Offenstellung, vorzugsweise in einen Bereich hinter die Austrittwand, überführt und anschließend der Airbag durch die Airbagaustrittöffnung hindurch aufgeblasen. Vorteilhaft übemimmt der Airbag in einer Doppelfunktion hier somit auch die Öffnung der Abdeckung, wodurch sich eine weitere vorteilhafte Bauteilreduzierung ergibt, da keine separaten Zugmittel zum Öffnen der Abdeckung erforderlich sind. Eine derartige Airbagfaltung ist zudem einfach herstellbar, so daß ein derartiger Aufbau insgesamt sehr preiswert herzustellen ist.

In einer hierzu alternativen Ausführungsform ist das Zugmittel durch einen Seilzug gebildet, der über ortsfeste Umlenkpunkte so um das Airbagmodul herum zu der Abdeckung geführt ist, daß bei einer Verlagerung des Gasgenerators im Zylinderbereich, vorzugsweise in Richtung von der Abdeckung weg, eine Zugkraft auf den Seilzug aufbringbar ist dergestalt, daß diese die Abdeckung in ihre Offenstellung überführt und anschließend der Airbag durch die Airbagaustrittöffnung hindurch austritt und aufblasbar ist. Vorteilhaft kann mit einem derartigen Aufbau über die Anzahl, die Art und die Größe der Umlenkpunkte die auf die Abdeckung wirkende Zugkraft und damit die Öffnungskinematik individuell an die jeweilige Einbausituation angepasst werden. Insbesondere kann durch die Umlenkung über mehrere Umlenkrollen die zum Öffnen der Abdeckung erforderliche Zugkraft reduziert werden. Damit ist insgesamt eine gezielte und kontrollierte Aktivierung des Airbagmoduls mit einer funktionssicheren und schnellen Öffnung der Abdeckung möglich.

In einer bevorzugten Ausgestaltung ist jeweils zu beiden Seiten eines unteren Gasgeneratorendes ein erster ortsfester Umlenkpunkt beabstandet zum unteren Gasgeneratorende angeordnet. Um diese ersten ortsfesten Umlenkpunkte herum ist der Seilzug mit einem Teilbereich so geführt, daß dieser Teilbereich in etwa horizontal verläuft und vorzugsweise unmittelbar benachbart zum unteren Gasgeneratorende angeordnet ist, wobei die ersten ortsfesten Umlenkpunkte so voneinander beabstandet sind, daß der Gasgenerator unter Mitnähme des Seilzugs zwischen diesen hindurch verlagerbar ist. Mit einem derartigen Aufbau ist insbesondere eine schnelle Öffnung der Abdeckung möglich, da bereits unmittelbar zu Beginn der Verlagerung des Gasgenerators eine Zugkraft auf den Seilzug aufbringbar ist.

In einer bevorzugten Ausführungsform ist weiter vorgesehen, daß den ersten ortsfesten Umlenkpunkten jeweils ein zweiter ortsfester Umlenkpunkt zugeordnet ist, der bezüglich des unteren Gasgeneratorendes jeweils weiter nach außen versetzt und tiefer liegt als der jeweilige erste ortsfeste Umlenkpunkt, wobei die zweiten ortsfesten Umlenkpunkte vorzugsweise auf gleicher Höhe bezüglich des unteren Gasgeneratorendes liegen. Der Seilzug ist dann von den ersten ortsfesten Umlenkpunkten kommend jeweils um die zweiten ortsfesten Umlenkpunkte herum gegebenenfalls über weitere ortsfeste Umlenkpunkte in Richtung zur Abdeckung geführt. Mit einem derartigen Aufbau ist eine vorteilhafte Seilführung in Verbindung mit einer genau festlegbaren auf die Abdeckung wirkenden Zugkraft möglich.

Der Seilzug ist vorteilhaft mit jeweils einem freien Seilende zu beiden Seiten des Airbagmoduls nach oben in Richtung Abdeckung geführt und dort in einem endseitigen Randbereich festgelegt, wobei bei einer Verlagerung des Gasgenerators in Richtung von der Abdeckung weg zwischen den beiden ersten ortsfesten Umlenkpunkten hindurch durch Mitnahme des Seilzugs eine Zugkraft auf die beiden Seilenden wirkt dergestalt, daß diese mit jeweils einem Abdeckungsteilbereich zur Freigabe der Airbagaustrittöffnung um ein ortsfestes Schwenklager nach außen in Richtung von der Austrittwand aufschwenkbar sind. Dadurch wird erreicht, daß die Airbagaustrittöffnung z.B. insbesondere in Verbindung mit einem einstufigen Gasgenerator schnell für den Durchtritt eines Airbags freigegeben wird. Insbesondere in Verbindung mit einem zweistufigen Gasgenerator, bei dem die erste Stufe lediglich zum Verlagern des Gasgenerators dient, kann aber auch vorgesehen sein, daß die Seilenden so an der Abdeckung festgelegt sind, daß diese nach innen in den Nabenbereich geschwenkt wird. Die zweite Stufe wird dann erst nach dem Einklappen der Abdeckung gezündet.

Vorteilhaft ist der Airbag in der Ruhestellung in einem separaten Airbagtopf aufgenommen, der im Bereich der Lenkradnabe und/oder im Bereich der Lenksäule beabstandet dazu festgelegt ist. Der Seilzug kann dann hier bevorzugt im Bereich zwischen dem Airbagtopf und einer Wandung der Lenkradnabe und/oder der Lenksäule geführt werden, wodurch erreicht wird, daß der Airbag vom Seilzug abgetrennt ist und diese sich nicht wechselseitig behindern können.

In einem weiteren alternativen Ausführungsform ist der als Kolben verwendete Gasgenerator mit einem als Zylinderbereich ausgebildeten Vorkammergehäuse, das mit der Lenkradnabe und/oder der Lenksäule verbunden ist oder damit integral ausgebildet ist, in Richtung auf die Abdeckung zu verschiebbar gelagert. Der Gasgenerator bläst hier nach der Aktivierung über Ausströmöffnungen in das gegenüberliegend der Abdeckung vorzugsweise gasdicht geschlossene Vorkammergehäuse ein und baut dort einen Verschiebedruck zur Verlagerung des Gasgenerators in die Bereitschaftsstellung auf. Vorteilhaft wird mit einem derartigen Aufbau der Gasgenerator und damit auch der Airbag bereits zu Beginn der Aktivierung in Richtung Airbagaustrittöffnung, d. h. in die Entfaltungs- und Aufblasrichtung verlagert und diese Verlagerung in Richtung auf die Abdeckung zu gleichzeitig dazu benutzt, die Abdeckung zu öffnen.

Vorteilhaft ist hierbei das wenigstens eine Zugmittel mit dem Gasgenerator über eine Zugrichtungsumlenkung so verbunden, daß durch den in Richtung auf die Abdeckung verlagerbaren Gasgenerator die Abdeckung etwa in Gegenrichtung hinter die Austrittwand bewegbar ist.

In einer besonders bevorzugten Ausführungsform ist der Airbag mit der Aktivierung des Gasgenerators, vorzugsweise erst in der verlagerten Bereitschaftsstellung des Gasgenerators, über eine Gasverbindung aufblasbar. Hiermit wird eine besonders hohe Öffnungssicherheit erreicht, da nach der Aktivierung des Gasgenerators das ausströmende Gas vorerst nur für dessen eigene Verlagerung zum Öffnen der Abdeckung verwendet wird. Erst anschließend und zeitversetzt dazu wird dann das weiter ausströmende Gas auch für den Aufblasvorgang des Airbags bei bereits freigebender Airbagaustrittöffnung verwendet.

In einer konkreten Ausführungsform hierzu wird vorgeschlagen, am Vorkammergehäuse im Verschiebeweg des Gasgenerators, vorzugsweise im Bereich der verlagerten Bereitschaftsstellung des Gasgenerators, wenigstens eine Überströmöffnung anzuordnen, durch die nach einem überfahren der Überströmöffnung durch den Gasgenerator eine Gasverbindung zum Airbag hergestellt ist. Vor dem Erreichen der Überströmöffnung besteht somit noch keine Gasverbindung zwischen dem Gasgenerator und dem Airbag, so daß der Gasgenerator nach seiner Aktivierung vorerst ausschließlich als Antrieb für eine sichere Öffnung der Abdeckung und erst anschließend für den Aufblasvorgang des Airbags eingesetzt ist.

Vorteilhaft weist der Gasgenerator hierzu radiale Aufblasöffnungen auf, wobei der verlagerbare Gasgenerator bzw. das verlagerbare Airbagmodul entlang des Verschiebewegs mittels wenigstens einem Dichtungselement gasdicht im Vorkammergehäuse geführt sind. Damit wird eine hohe Funktionssicherheit des Öffnungsantriebs erreicht.

Als Zugelemente sind grundsätzlich auch an sich bekannte Gestänge oder Zugbänder verwendbar. Besonders vorteilhaft und preisgünstig kann als das wenigstens eine Zugmittel ein Seilzug vorgesehen sein, der ausgehend vom Gasgenerator gasdicht aus dem Vorkammergehäuse entgegen der Verlagerungsrichtung des Gasgenerators heraus geführt und wenigstens über zwei ortsfeste Umlenkpunkte um das Vorfcammergehäuse herum zu der vor dem Vorkammergehäuse in einem Abstand liegenden Abdeckung geführt und dort verbunden ist. Dadurch ist der Seilzug durch die angreifende Gasgeneratorbewegung aus der ursprünglichen Lage zur Erzeugung der Öffnungskraft für die Abdeckung auslenkbar.

In einer besonders bevorzugten Ausführungsform ist vorgesehen, daß der Gasgenerator ein Zweistufen-Gasgenerator ist, wobei nach der Aktivierung durch einen Crashsensor mit der ersten Generatorstufe der pyrotechnische Antrieb betätigbar ist und zeitversetzt dazu mit der zweiten Generatorstufe der Airbag aufblasbar ist.

Die Abdeckung ist vorteilhaft durch wenigstens eine schwenkbar nach innen oder außen zum Airbagmodul hin öffenbare Airbag-Klappe gebildet, wobei die Abdeckung für ein definiertes Aufreißen und damit eine definierte Freigabe der Airbagaustrittöffnung durch eine an einer Vorkerbung aufreißbare Außenhaut gebildet ist.

Eine weitere vorteilhafte Sicherheitsfunktion ergibt sich dadurch, daß im Bereich der Lenkradnabe und/oder der Lenksäule ein Teilbereich als Deformationsbereich ausgebildet ist. Ein derartiger Deformationsbereich kann beispielsweise in der Art eines Wellenprofils und/oder in der Art eines Stülprohres ausgebildet sein.

Die Erfindung wird nachfolgend anhand einer Zeichnung näher erläutert.

### Es zeigen:

- Fig. 1: eine schematische Schnittansicht einer Lenkvorrichtung mit einer ersten Ausführungsform eines pyrotechnischen Öffnungsantriebs,
- Fig. 2: eine vergrößerte Detaildarstellung des unteren Gasgeneratorendes der Fig. 1,
- Fig. 3: eine schematische Schnittansicht einer Lenkvorrichtung mit einer zweiten Ausführungsform eines pyrotechnischen Öffnungsantriebs, und
- Fig. 4: eine schematische Schnittansicht einer Lenkvorrichtung mit einer dritten Ausführungsform eines pyrotechnischen Öffnungsantriebs.

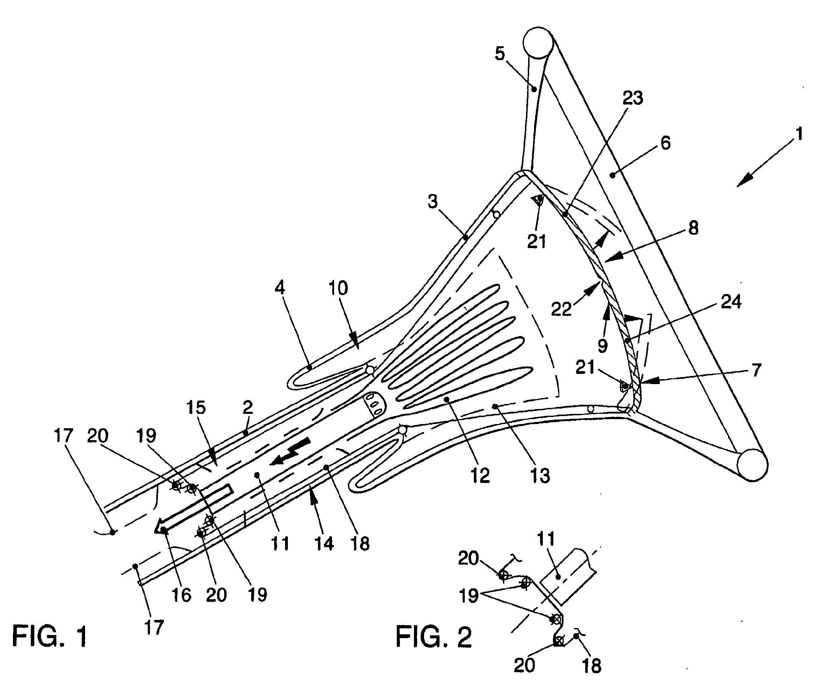

In Fig. 1 ist ein schematischer Querschnitt durch einen Teilbereich einer Lenkvorrichtung 1 eines Kraftfahrzeuges dargestellt. Diese Lenkvorrichtung 1 umfaßt eine Lenksäule 2, die endseitig eine Lenkradnabe 3 aufweist. Die Lenkradnabe 3 ist topfförmig ausgebildet und weist im Übergangsbereich zur Lenksäule 2 einen als Stülprohr 4 ausgebildeten Deformationsbereich auf.

An der Lenkradnabe 3 ist über Lenkradspeichen 5 ein Lenkrad 6 angeordnet, das sich in etwa ringförmig um den Lenkradnabenbereich herum erstreckt.

Die Lenkradnabe 3 weist endseitig eine Austrittwand 7 auf, in der eine Airbagaustrittöffnung 8 von einer Abdeckung 9 abgedeckt ist.

Wie dies aus der Fig. 1 weiter ersichtlich ist, ist hinter der Abdeckung 9 ein Airbagmodul 10 angeordnet, das einen zweistufigen Gasgenerator 11 und einen Airbag 12 umfaßt. Im in der Fig. 1 dargestellten, nicht aktivierten Zustand ist der Airbag 12 in einem separaten Airbagtopf 13 aufgenommen, der hier lediglich schematisch und strichliert eingezeichnet ist. Dieser Airbagtopf 13 ist im Bereich der Lenkradnabe 3 angeordnet und dort beabstandet zu einem Lenkradnabenwandbereich festgelegt.

Der zweistufige Gasgenerator 11 ist hier gleichzeitig Bestandteil eines als Zylinder-Kolben-Einheit ausgebildeten pyrotechnischen Antriebs 14 zur Freigabe der Airbagaustrittöffnung 8, bei der der zweistufige Gasgenerator 11 den Kolben bildet, der in einem als Zylinder fungierenden Zylinderbereich 15 der Lenksäule 2 von einer in der Fig. 1 dargestellten Ruhestellung in Richtung des Pfeils 16 in eine hier nicht dargestellte Bereitschaftsstellung verschiebbar gelagert ist. Der Gasgenerator 11 kann dabei, wie dies in der Fig. 1 strichliert eingezeichnet ist, durch Führungselemente, wie z. B. Führungsbleche 17 formschlüssig im Zylinderbereich 15 der Lenksäule 2 aufgenommen sein.

Der pyrotechnische Antrieb 14 umfaßt ferner einen Seilzug 18 als Zugmittel, der mit einem Teilbereich so um jeweils zu beiden Seiten eines unteren Gasgeneratorendes angeordnete und in etwa auf gleicher Höhe bezüglich dieses unteren Gasgenerators angeordnete erste, ortsfeste Umlenkpunkte 19 geführt ist, daß dieser Teilbereich in etwa horizontal und unmittelbar benachbart zum unteren Gasgeneratorende verläuft, wie dies insbesondere auch aus der Fig. 2 ersichtlich ist, die eine schematische und vergrößerte Detailansicht dieses unteren Gasgeneratorbereichs zeigt. Wie dies aus den Fig. 1 und 2 weiter ersichtlich ist, sind die beiden ersten ortsfesten Umlenkpunkte 19 so voneinander beabstandet, daß der zweistufige Gasgenerator 11 unter Mitnahme des Seilzugs zwischen diesen hindurch in Richtung des Pfeils 16 verlagert werden kann.

Wie dies aus den Fig. 1 und 2 zudem weiter entnommen werden kann, ist den ersten ortsfesten Umlenkpunkten 19 jeweils ein zweiter ortsfester Umlenkpunkt 20 zugeordnet, der bezüglich des unteren Gasgeneratorendes jeweils weiter nach außen versetzt und tiefer liegt als der jeweilige zugeordnete erste ortsfeste Umlenkpunkt 19, wobei die zweiten ortsfesten Umlenkpunkte 20 in etwa auf gleicher Höhe bezüglich des unteren Gasgeneratorendes liegen. Der Seilzug 18 ist von den ersten ortsfesten Umlenkpunkten 19 kommend jeweils um den zweiten ortsfesten Umlenkpunkte 20 herum entlang des Gasgenerators 11 sowie im Bereich des zwischen dem Airbagtopf 13 und einer Lenkradnabenwand nach oben in Richtung zu der Abdeckung 9 geführt. Dort sind die beiden freien Seilenden des Seilzugs 18 jeweils in einem endseitigen Randbereich der Abdeckung festgelegt.

Im Falle eines sensierten Aufpralls durch einen hier nicht dargestellten Crashsensor wird über diesen Crashsensor eine erste Generatorstufe des zweistufigen Gasgenerators 11 aktiviert, wodurch der Gasgenerator 11 in Richtung des Pfeils 16 von der Abdeckung 9 weg zwischen den beiden ersten ortsfesten Umlenkpunkten 19 hindurch in die Bereitschaftsstellung verlagert wird. Bei dieser Verlagerung nimmt der Gasgenerator den Seilzug 18 mit und übt somit eine Zugkraft auf den randseitigen Abdeckungsbereich aus, so daß die Abdeckung 9 in einem hier lediglich beispielsweise dargestellten mittleren, mit einer Einkerbung 22 versehenen Abdeckungsbereich aufreißt und um ein jeweils vom randseitigen Endbereich etwas nach innen versetztes ortsfestes Schwenklager 21 verschwenkt, wie dies in der Fig. 1 lediglich schematisch strichliert eingezeichnet ist. Durch dieses Aufschwenken der Abdeckungsteilbereiche 23, 24 wird die Airbagaustrittöffnung 8 freigegeben, so daß der Airbag 12 mit der zeitversetzt aktivierten zweiten Generatorstufe des zweistufigen Gasgenerators 11 aufblasbar ist und durch die Airbagaustrittöffnung 8 hindurch vor einem Fahrzeuginsassen aufblasbar ist.

Gegebenenfalls können zusätzlich zu den ersten und zweiten Umlenkpunken 19, 20 noch weitere zusätzliche Umlenkpunkte vorgesehen sein, die insbesondere hinsichtlich ihrer Dimensionierung so ausgebildet sein können, daß bei einer Verlagerung des Gasgenerators 11 eine definierte Zugkraft auf die Abdeckung 9 wirkt.

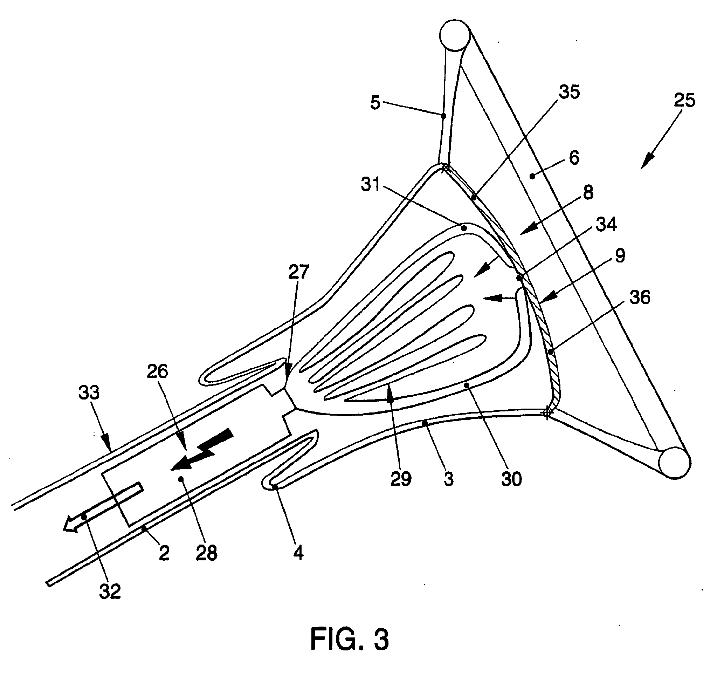

In der Fig. 3 ist eine schematische Schnittansicht durch einen Teilbereich einer Lenkvorrichtung 25 mit einer alternativen Ausführungsform eines pyrotechnischen Antriebs 26 zur Freigabe der Airbagaustrittöffnung 8 dargestellt, wobei in den Figuren 1 und 3 gleiche Teile mit gleichen Bezugszeichen bezeichnet werden.

Ein Airbagmodul 27 umfasst hier einen zweistufigen Gasgenerator 28 sowie einen damit verbundenen Airbag 29. Der Gasgenerator 28 ist formschlüssig in der Lenksäule 2 aufgenommen, während der Airbag 29 in der in der Fig. 3 dargestellten Ruhestellung in der topfförmigen Lenkradnabe 3 aufgenommen ist. Ein Zugmittel zur Öffnung der Abdeckung 9 ist hier durch den Airbag 29 selbst gebildet, bei dem, wie dies in der Darstellung der Fig. 3 lediglich äußerst schematisch dargestellt ist, der Airbag mit zwei Airbagteilbereichen 30, 31 so gefaltet und an der Abdeckung 9 festgelegt ist, daß bei einer Verlagerung des Gasgenerators 28 im durch die Lenksäule 2 gebildeten Zylinderbereich 33 in Richtung des Pfeils 32 durch Zündung einer ersten Gasgeneratorstufe eine Zugkraft über die mit der Abdeckung 9 verbundenen Airbagteilbereiche 30, 31 auf die Abdeckung 9 aufbringbar ist, so daß diese an einer als Einkerbung 34 ausgebildeten Sollbruchstelle aufreißt und unter Freigabe der Airbagaustrittöffnung 8 mit zwei Abdeckungsklappen 35, 36 nach innen in die Lenkradnabe 3 hinein gezogen wird, so daß anschließend der Airbag 29 durch Zündung einer zweiten Gasgeneratorstufe ungehindert austreten und vor einem Fahrzeuginsassen aufgeblasen werden kann.

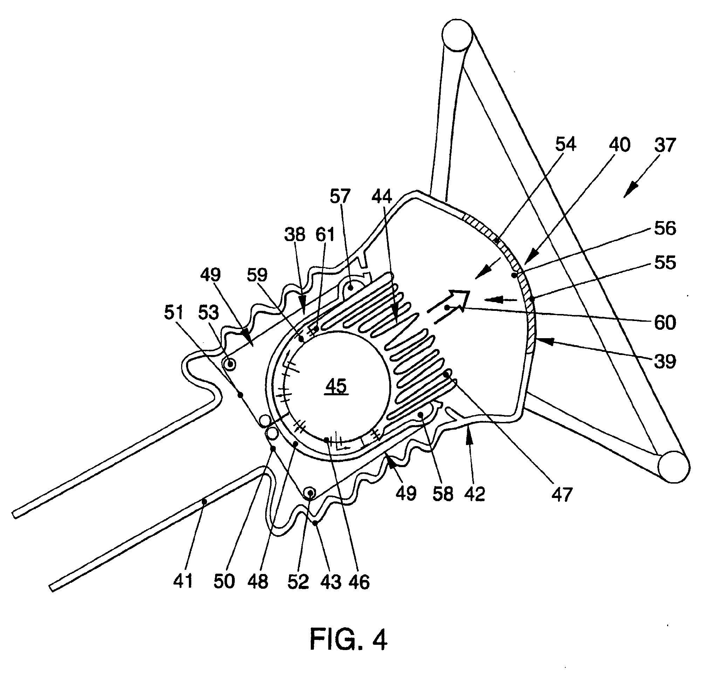

In der Fig. 4 ist eine schematische Schnittansicht durch einen Teilbereich einer Lenkvorrichtung 37 dargestellt, die eine weitere alternative Ausführungsform eines pyrotechnischen Antriebs 38 zur Öffnung einer Abdeckung 39 zur Freigabe einer Airbagaustrittöffnung 40 zeigt.

Die Lenkvorrichtung 37 umfaßt eine Lenksäule 41, an deren Endseite sich eine topfförmige Lenkradnabe 42 anschließt, wobei die Lenkradnabe 42 in einem Teilbereich als Wellenprofil 43 ausgeführt ist. In der Lenkradnabe 42 ist ein Airbagmodul 44 angeordnet, das einen zweistufigen Gasgenerator 45 mit radialen Ausblasöffnungen 46 und einem mit dem Gasgenerator 45 verbunden, zusammengefalteten Airbag 47 umfaßt.

Der Gasgenerator 45 ist hier wiederum Bestandteil des als Zylinder-Kolben-Einheit ausgebildeten pyrotechnischen Antriebs 38, wobei der Gasgenerator 45 den Kolben bildet, der in einem als Zylinderbereich fungierenden Vorkammergehäuse 48, das Bestandteil der Lenkradnabe 42 ist, verschiebbar gelagert ist.

Weiter umfaßt der pyrotechnische Antrieb 38 einen Seilzug 49 als Zugmittel. Dieser Seilzug 49 umfaßt zwei Zugschnüre 50, 51, die ausgehend vom Gasgenerator 45 gasdicht aus dem Vorkammergehäuse 6 herausgeführt sind. Jede dieser Zugschnüre 50, 51 ist auf gegenüberliegenden Seiten des Vorkammergehäuses 48 über zwei ortsfeste Umlenkpunkte 52, 53 um das Vorkammergehäuse 48 herum zu der vor dem Vorkammergehäuse 48 in einem Abstand liegenden Abdeckung 39 geführt und dort befestigt. Die Abdeckung 39 umfaßt auch hier wiederum zwei Abdeckungsklappen 54, 55, die am Randbereich schwenkbar angelenkt sind und in einem mittleren Bereich der Abdeckung 39 eine Einkerbung 56 als Sollbruchstelle aufweisen.

In einem abdeckungsnahen, vorderen Bereich des Vorkammergehäuses 48 sind an gegenüberliegenden Seiten Überströmöffnungen 57, 58 ausgebildet. Ferner ist der Gasgenerator 45 mittels einem Dichtungselement 59 gasdicht im Vorkammergehäuse 48 geführt.

Im Crashfall wird eine erste Stufe des zweistufigen Gasgenerators 45 gezündet, wodurch Gas über die Ausblasöffnungen 46 in das mittels der Dichtungselemente 59 gasdicht geschlossene Vorkammergehäuse 48 eingeblasen wird. Der sich in diesem Bereich des Vorkammergehäuses 48 aufbauende Gasdruck führt zu einer Verschiebung des Gasgenerators 45 und damit des gesamten Airbagmoduls 44 in Richtung des Pfeils 60 in der Fig. 4. Durch diese in der Art einer Zylinder-Kolben-Einheit wirkende Verschiebung des Gasgenerators 45 als Kolben in dem als Zylinderbereich ausgebildeten Vorkammergehäuse 48 werden die beiden gasgeneratorseitigen Zugschnurenden ebenfalls in Richtung des Pfeils 60 verlagert, wodurch eine Zugkraft auf die beiden wandabdeckungsseitigen Zugschnurenden ausgeübt wird. Diese Zugkraft bewirkt, daß die Abdeckung 39 an der Einkerbung 56 aufreißt, wobei die Abdeckungsklappen 54, 55 nach innen klappen und die Airbagaustrittöffnung 40 unter gleichzeitiger Ausbildung eines Kantenschutzes freigeben.

Sobald der Gasgenerator 45 mit den Dichtungselementen 59 ausgehend von der in der Fig. 4 dargestellten Ruhestellung in dem Bereich der Überströmöffnungen 57, 58 verlagert ist, was hier allerdings nicht dargestellt ist, wird nach einem Überfahren dieser Überströmöffnungen 57, 58 über Airbag-Einströmöffnungen 61, 62 eine Gasverbindung zum Airbag 47 hergestellt. Der Airbag 47 wird durch eine zum Zeitpunkt des Überfahrens der Überströmöffnungen 57, 58 aktivierte zweite Stufe des Gasgenerators 45 aufgeblasen und tritt daraufhin aus der Airbagaustrittöffnungen 40 in einen Fahrzeuginnenraum hin aus.

### BEZUGSZEICHENLISTE

- 1: Lenkvorrichtung
- 2: Lenksäule
- 3: Lenkradnabe
- 4: Stülprohr
- 5: Lenkradspeichen
- 6: Lenkrad
- 7: Austrittwand
- 8: Airbagaustrittöffnung
- 9: Abdeckung
- 10: Airbagmodul
- 11: Gasgenerator
- 12: Airbag
- 13: Airbagtopf
- 14: pyrotechnischer Antrieb
- 15: Zylinderbereich
- 16: Pfeil
- 17: Führungsblech
- 18: Seilzug
- 19: erster Umlenkpunkt
- 20: zweiter Umlenkpunkt
- 21: Schwenklager
- 22: Einkerbung
- 23: Abdeckungsteilbereich
- 24: Abdeckungsteilbereich
- 25: Lenkvorrichtung
- 26: pyrotechnischer Antrieb
- 27: Airbagmodul
- 28: Gasgenerator
- 29: Airbag
- 30: Airbagteilbereich
- 31: Airbagteilbereich
- 32: Pfeil
- 33: Zylinderbereich
- 34: Einkerbung
- 35: Abdeckungsklappe
- 36: Abdeckungsklappe
- 37: Lenkvorrichtung
- 38: pyrotechnischer Antrieb
- 39: Abdeckung
- 40: Airbagaustrittöffnung
- 41: Lenksäule
- 42: Lenkradnabe
- 43: Wellenprofil
- 44: Airbagmodul
- 45: Gasgenerator
- 46: radiale Ausblasöffnung
- 47: Airbag
- 48: Vorkammergehäuse
- 49: Seilzug
- 50: Zugschnur
- 51: Zugschnur
- 52: Umlenkpunkt
- 53: Umlenkpunkt
- 54: Abdeckungsklappe
- 55: Abdeckungsklappe
- 56: Einkerbung
- 57: Überströmöffnung
- 58: Überströmöffnung
- 59: Dichtungselement
- 60: Pfeil
- 61: Airbag-Einströmöffnung
- 62: Airbag-Einströmöffnung

## Patentansprüche

1. Lenkvorrichtung für ein Fahrzeug, insbesondere für ein Kraftfahrzeug, mit einem Airbagmodul (10; 27; 44), das eine Lenksäule (2; 41) mit einer endseitigen Lenkradnabe (3; 42) aufweist, an der das Lenkrad (6) angeordnet ist, wobei die Lenkradnabe (3;42) vorzugsweise topfförmig ausgebildet ist und eine Austrittswand (7) mit einer öffenbaren Abdeckung (9; 39) umfaßt, hinter der das Airbagmodul (10; 27; 44), das einen Gasgenerator (11; 28; 45) und einen Airbag (12; 29; 47) umfaßt, angeordnet ist, wobei die Abdeckung (9; 39) im aktivierten Zustand des Airbagmoduls (10; 27; 44) eine Airbagaustrittöffnung (8; 40) freigibt, durch die hindurch der Airbag (12;29; 47) vor dem Lenkrad (6) aufblasbar ist, **dadurch gekennzeichnet, daß** die Abdeckung (9; 39) mit wenigstens einem Zugmittel (18; 30, 31; 49) gekoppelt ist, das mittels eines pyrotechnischen Antriebs (14; 26; 38) betätigbar ist, daß der pyrotechnische Antrieb (14; 26; 38) als Zylinder-Kolben-Einheit ausgebildet ist, bei der der Gasgenerator (11; 28; 45) den Kolben bildet, der in einem als Zylinder fungierenden Zylinderbereich (15; 33; 48) der Lenkradnabe (3; 42) und/oder der Lenksäule (2; 41) von einer Ruhestellung in eine Bereitschaftsstellung verschiebbar gelagert ist, daß ferner das wenigstens eine Zugmittel (18; 30, 31; 49) mit dem Gasgenerator (11; 28; 45) mittelbar und/oder unmittelbar so verbunden ist, daß bei einer Verlagerung des Gasgenerators (11; 28; 45) in dem Zylinderbereich (15; 33; 48) eine Zugkraft auf das wenigstens eine Zugmittel (18; 30, 31; 49) aufbringbar ist dergestalt, daß das Zugmittel (18; 30, 31; 49) die Abdeckung (9; 39) zur Freigabe der Airbagaustrittöffnung (8; 40) aus deren Abdeckstellung in deren Offenstellung überführt, und dass der Gasgenerator (11; 28; 45) nach seiner Aktivierung mit dem aus ihm ausströmenden Gas bis zum Erreichen seiner Bereitschaftsstellung nur zu seiner Verlagerung und erst anschließend für das Aufblasen des Airbags (12; 29; 47) verwendet wird.

2. Lenkvorrichtung nach Anspruch 1, **dadurch gekennzeichnet, daß** das wenigstens eine Zugmittel durch den Airbag (29) selbst gebildet ist, der mit wenigstens einem Airbagteilbereich (30, 31) so an der Abdeckung (9) festgelegt ist, daß bei einer Verlagerung des Gasgenerators (28) im Zylinderbereich (33), vorzugsweise in Richtung von der Abdeckung (9) weg, eine Zugkraft auf den wenigstens einen Airbagteilbereich (30, 31) aufbringbar ist dergestalt, daß diese die Abdeckung (9) in ihre Offenstellung, vorzugsweise in einen Bereich hinter die Austrittwand, überführt und anschließend der Airbag (29) durch die Airbagaustrittöffnung (8) hindurch austritt und aufblasbar ist.

3. Lenkvorrichtung nach Anspruch 1, **dadurch gekennzeichnet, daß** das Zugmittel ein Seilzug (18) ist, der über ortsfeste Umlenkpunkte (19, 20) so um das Airbagmodul (10) herum zu der Abdeckung (9) geführt ist, daß bei einer Verlagerung des Gasgenerators (11) im Zylinderbereich (15), vorzugsweise in Richtung von der Abdeckung (9) weg, eine Zugkraft auf den Seilzug (18) aufbringbar ist dergestalt, daß diese die Abdeckung (9) in ihre Offenstellung überführt und anschließend der Airbag (12) durch die Airbagaustrittöffnung (8) hindurch austritt und aufblasbar ist.

4. Lenkvorrichtung nach Anspruch 3, **dadurch gekennzeichnet, daß** jeweils zu beiden Seiten eines unteren Gasgeneratorendes ein erster ortsfester Umlenkpunkt (19) beabstandet dazu vorgesehen ist, um die herum der Seilzug (18) mit einem Teilbereich so geführt ist, daß dieser Teilbereich in etwa horizontal verläuft und vorzugsweise unmittelbar benachbart zum unteren Gasgeneratorende angeordnet ist, wobei die ersten ortsfesten Umlenkpunkte (19) so voneinander beabstandet sind, daß der Gasgenerator (11) unter Mitnahme des Seilzugs (18) zwischen diesen hindurch verlagerbar ist.

5. Lenkvorrichtung nach Anspruch 4, **dadurch gekennzeichnet, daß** den ersten ortsfesten Umlenkpunkten (19) jeweils ein zweiter ortsfester Umlenkpunkt (20) zugeordnet ist, der bezüglich des unteren Gasgeneratorendes jeweils weiter nach außen versetzt und tiefer liegt als der jeweilige erste ortsfeste Umlenkpunkt (19), wobei die zweiten ortsfesten Umlenkpunkte (20) vorzugsweise auf gleicher Höhe bezüglich des unteren Gasgeneratorendes liegen, und daß der Seilzug (18) von den ersten ortsfesten Umlenkpunkten (19) kommend jeweils um die zweiten ortsfesten Umlenkpunkte (20) herum gegebenenfalls über weitere ortsfeste Umlenkpunkte in Richtung zur Abdeckung (9) geführt ist.

6. Lenkvorrichtung nach einem der Ansprüche 3 bis 5, **dadurch gekennzeichnet, daß** der Seilzug (18) mit jeweils einem freien Seilende zu beiden Seiten des Airbagmoduls (10) nach oben in Richtung Abdeckung (9) geführt und dort in einem endseitigen Randbereich festgelegt ist, und daß bei einer Verlagerung des Gasgenerators (11) in Richtung von der Abdeckung (9) weg zwischen beiden ersten ortsfesten Umlenkpunkten (19) hindurch durch Mitnahme des Seilzugs (18) eine Zugkraft auf die beiden Seilenden wirkt dergestalt, daß diese mit jeweils einem Abdeckungsteilbereich (23, 24) zur Freigabe der Airbagaustrittöffnung (8) um ein ortsfestes Schwenklager (21) nach außen in Richtung von der Austrittwand (7) weg aufschwenkbar sind.

7. Lenkvorrichtung nach einem der Ansprüche 3 bis 6, **dadurch gekennzeichnet, daß** der Airbag (12) in der Ruhestellung in einem separaten Airbagtopf (13) aufgenommen ist, der im Bereich der Lenkradnabe (3) und/oder im Bereich der Lenksäule (2) beabstandet dazu festgelegt ist dergestalt, daß der Seilzug (18) im Bereich zwischen dem Airbagtopf (13) und einer Wandung der Lenkradnabe (3) und/oder der Lenksäule (2) geführt ist.

8. Lenkvorrichtung nach Anspruch 1, **dadurch gekennzeichnet, daß** der als Kolben verwendete Gasgenerator (45) in einem als Zylinderbereich ausgebildeten Vorkammergehäuse (48), das mit der Lenkradnabe (42) und/oder der Lenksäule (41) verbunden ist oder damit integral ausgebildet ist, in Richtung auf die Abdeckung (39) zu verschiebbar gelagert ist dergestalt, daß der Gasgenerator (45) nach der Aktivierung über Ausströmöffnungen (46) in das gegenüberliegend der Abdeckung (39) vorzugsweise gasdicht geschlossene Vorkammergehäuse (48) einbläst und dort einen Verschiebedruck zur Verlagerung des Gasgenerators (45) in die Bereitschaftsstellung aufbaut.

9. Lenkvorrichtung nach Anspruch 8, **dadurch gekennzeichnet, daß** das wenigstens eine Zugmittel (49) mit dem Gasgenerator (45) über eine Zugrichtungsumlenkung verbunden ist dergestalt, daß durch den in Richtung auf die Abdeckung (39) verlagerbaren Gasgenerator (45) die Abdeckung (39) etwa in Gegenrichtung hinter die Austrittwand bewegbar ist.

10. Lenkvorrichtung nach Anspruch 8 oder 9, **dadurch gekennzeichnet, daß** der Airbag (47) mit der Aktivierung des Gasgenerators (45), vorzugsweise erst in der verlagerten Bereitschaftsstellung des Gasgenerators (45), über eine Gasverbindung aufblasbar ist.

11. Lenkvorrichtung nach einem der Ansprüche 8 bis 10, **dadurch gekennzeichnet, daß** am Vorkammergehäuse (48) im Verschiebeweg des Gasgenerators (45), vorzugsweise im Bereich der verlagerten Bereitschaftsstellung des Gasgenerators (45), wenigstens eine Überströmöffnung (57, 58) angeordnet ist und nach einem Überfahren der Überströmöffnung (57, 58) durch den Gasgenerator (45) eine Gasverbindung zum Airbag (47) hergestellt ist.

12. Lenkvorrichtung nach einem der Ansprüche 8 bis 11, **dadurch gekennzeichnet, daß** der Gasgenerator (45) radiale Ausblasöffnungen (46) aufweist.

13. Lenkvorrichtungen nach einem der Ansprüche 8 bis 12, **dadurch gekennzeichnet, daß** der verlagerbare Gasgenerator (45) und/oder das verlagerbare Airbagmodul . (44) entlang des Verschiebewegs mittels wenigstens einem Dichtungselement (59) gasdicht im Vorkammergehäuse (48) geführt ist.

14. Lenkvorrichtung nach einem der Ansprüche 8 bis 13, **dadurch gekennzeichnet, daß** das Zugmittel wenigstens ein Seilzug (49) ist, der ausgehend vom Gasgenerator (45) gasdicht aus dem Vorkammergehäuse (48) entgegen der Verlagerungsrichtung des Gasgenerators (45) herausgeführt und wenigstens über zwei ortsfeste Umlenkpunkte (52, 53) um das Vorkammergehäuse (48) herum zu der vor dem Vorkammergehäuse (48) in einem Abstand liegenden Abdeckung (39) geführt und dort verbunden ist, wobei der Seilzug (49) durch die daran angreifende Gasgeneratorbewegung aus der ursprünglichen Lage zur Erzeugung der Öffnungskraft für die Abdeckung (39) auslenkbar ist.

15. Lenkvorrichtung nach einem der Ansprüche 1 bis 14, **dadurch gekennzeichnet, daß** der Gasgenerator (11, 28; 45) ein Zweistufen-Gasgenerator ist, wobei nach Aktivierung durch einen Crashsensor mit der ersten Generatorstufe der pyrotechnische Antrieb (14; 26; 38) betätigbar ist und zeitversetzt mit der zweiten Generatorstufe der Airbag (12; 29; 47) aufblasbar ist.

16. Lenkvorrichtung nach einem der Ansprüche 1 bis 15, **dadurch gekennzeichnet, daß** die Abdeckung (9; 39) aus wenigstens einer schwenkbar nach innen oder außen hin öffenbaren Airbag-Klappe (23, 24; 35, 36; 54, 55) besteht.

17. Lenkvorrichtung nach einem der Ansprüche 1 bis 16, **dadurch gekennzeichnet, daß** die Abdeckung (9; 39) durch eine an einer Vorkerbung (22; 34; 56) aufreißbare Außenhaut gebildet ist.

18. Lenkvorrichtung nach einem der Ansprüche 1 bis 17, **dadurch gekennzeichnet, daß** der Airbag (12; 29; 47) auf die Abdeckung (9; 39) hin gerichtet ist und das Airbagmodul (10; 27; 44) insgesamt verlagerbar ausgebildet ist.

19. Lenkvorrichtung nach einem der Ansprüche 1 bis 18, **dadurch gekennzeichnet, daß** im Bereich der Lenkradnabe (3; 42) und/oder der Lenksäule (2; 41) ein Teilbereich als Deformationsbereich, vorzugsweise in der Art eines Wellenprofils (43) und/oder Stülprohres (4), ausgebildet ist.

## Claims

1. Steering apparatus for a vehicle, in particular for a motor vehicle, having an airbag module (10; 27; 44), which steering apparatus has a steering column (2; 41) with an end-side steering wheel hub (3; 42), on which the steering wheel (6) is arranged, the steering wheel hub (3; 42) preferably being of pot-shaped configuration and comprising an exit wall (7) with a cover (9; 39) which can be opened and behind which the airbag module (10; 27; 44) is arranged which comprises a gas generator (11; 28; 45) and an airbag (12; 29; 47), the cover (9; 39) exposing an airbag exit opening (8; 40) in the activated state of the airbag module (10; 27; 47), through which airbag exit opening (8; 40) the airbag (12; 29; 47) can be inflated in front of the steering wheel (6), **characterized in that** the cover (9; 39) is coupled to at least one drawing means (18; 30, 31; 49) which can be actuated by means of a pyrotechnic drive (14; 26; 38), **in that** the pyrotechnic drive (14; 26; 38) is configured as a cylinder-piston unit, in which the gas generator (11; 28; 45) forms the piston which is mounted in a cylinder region (15; 33; 48) of the steering wheel hub (3; 42) and/or of the steering column (2; 41), which cylinder region (15; 33; 48) acts as a cylinder, in such a way that the said piston can be displaced from a rest position into a readiness position, **in that**, furthermore, the at least one drawing means (18; 30, 31; 49) is connected indirectly and/or directly to the gas generator (11; 28; 45) in such a way that, when the gas generator (11; 28; 45) is displaced in the cylinder region (15; 33; 48), a tensile force can be exerted on the at least one drawing means (18; 30, 31; 49) in such a way that the drawing means (18; 30, 31; 49) moves the cover (9; 39) from its covering position into its open position in order to expose the airbag exit opening (8; 40), and **in that** the gas generator (11; 28; 45) is used only for its displacement after its activation with the gas flowing out of it until its readiness position has been reached, and is used only subsequently to inflate the airbag (12; 29; 47).

2. Steering apparatus according to Claim 1, **characterized in that** the at least one drawing means is formed by the airbag (29) itself which is fixed to the cover (9) with at least one airbag part region (30, 31) in such a way that, when the gas generator (28) is displaced in the cylinder region (33), preferably in the direction away from the cover (9), a tensile force can be exerted on the at least one airbag part region (30, 31) in such a way that the said tensile force moves the cover (9) into its open position, preferably into a region behind the exit wall, and the airbag (29) subsequently emerges through the airbag exit opening (8) and can be inflated.

3. Steering apparatus according to Claim 1, **characterized in that** the drawing means is a cable pull (18) which is guided via stationary deflection points (19, 20) around the airbag module (10) to the cover (9), in such a way that, when the gas generator (11) is displaced in the cylinder region (15), preferably in the direction away from the cover (9), a tensile force can be exerted on the cable pull (18) in such a way that the said tensile force moves the cover (9) into its open position and the airbag (12) subsequently emerges through the airbag exit opening (8) and can be inflated.

4. Steering apparatus according to Claim 3, **characterized in that**, in each case on both sides of a lower gas generator end, a first stationary deflection point (19) is provided at a distance from the said gas generator end, around which deflection point (19) a part region of the cable pull (18) is guided in such a way that this part region extends approximately horizontally and is preferably arranged directly adjacently to the lower gas generator end, the first stationary deflection points (19) being spaced apart from one another in such a way that the gas generator (11) can be displaced between them while driving the cable pull (18).

5. Steering apparatus according to Claim 4, **characterized in that** the first stationary deflection points (19) are assigned in each case a second stationary deflection point (20) which in each case lies lower and offset further outwards than the respective first stationary deflection point (19) with regard to the lower gas generator end, the second stationary deflection points (20) preferably lying at the same height with regard to the lower gas generator end, and **in that** the cable pull (18), coming from the first stationary deflection points (19), is guided in each case around the second stationary deflection points (20), optionally via further stationary deflection points, in the direction of the cover (9).

6. Steering apparatus according to one of Claims 3 to 5, **characterized in that** in each case one free cable end of the cable pull (18) is guided upwards in the direction of the cover (9) on both sides of the airbag module (10), and the cable pull (18) is fixed there in an end-side edge region, and **in that**, when the gas generator (11) is displaced in the direction away from the cover (9) between the two first stationary deflection points (19), a tensile force acts on the two cable ends as a result of the cable pull (18) being driven with it, in such a way that the said cable ends, together with in each case one cover part region (23, 24), can be pivoted outwards about a stationary pivoting bearing (21) in the direction away from the exit wall (7), in order to expose the airbag exit opening (8).

7. Steering apparatus according to one of Claims 3 to 6, **characterized in that**, in the rest position, the airbag (12) is accommodated in a separate airbag pot (13) which, in the region of the steering wheel hub (3) and/or in the region of the steering column (2) and at a distance from the latter, is fixed in position in such a way that the cable pull (18) is guided in the region between the airbag pot (13) and a wall of the steering wheel hub (3) and/or of the steering column (2).

8. Steering apparatus according to Claim 1, **characterized in that** the gas generator (45) which is used as a piston is mounted in an antechamber housing (48) which is formed as a cylinder region, is connected to the steering wheel hub (42) and/or the steering column (41) and is thus of integral configuration with the latter, in such a way that the said gas generator (45) can be displaced in the direction of the cover (39), such that, after activation, the gas generator (45) blows via outflow openings (46) into the antechamber housing (48) which is preferably closed in a gastight manner with respect to the cover (39), and builds up a displacement pressure there for moving the gas generator (45) into the readiness position.

9. Steering apparatus according to Claim 8, **characterized in that** the at least one drawing means (49) is connected to the gas generator (45) via a pulling direction deflection means, in such a way that the cover (39) can be moved approximately in the opposite direction behind the exit wall by the gas generator (45) which can be displaced in the direction of the cover (39).

10. Steering apparatus according to Claim 8 or 9, **characterized in that**, with the activation of the gas generator (45), the airbag (47) can be inflated via a gas connection, preferably only in the displaced readiness position of the gas generator (45).

11. Steering apparatus according to one of Claims 8 to 10, **characterized in that** at least one crossflow opening (57, 58) is arranged on the antechamber housing (48) in the displacement path of the gas generator (45), preferably in the region of the displaced readiness position of the gas generator (45), and a gas connection to the airbag (47) is produced after the gas generator (45) has moved over the crossflow opening (57, 58).

12. Steering apparatus according to one of Claims 8 to 11, **characterized in that** the gas generator (45) has radial ejection openings (46).

13. Steering apparatus according to one of Claims 8 to 12, **characterized in that** the displaceable gas generator (45) and/or the displaceable airbag module (44) are/is guided along a displacement path in the antechamber housing (48) in a gastight manner by means of at least one sealing element (59).

14. Steering apparatus according to one of Claims 8 to 13, **characterized in that** the drawing means is at least one cable pull (49) which, starting from the gas generator (45), is guided out of the antechamber housing (48) counter to the displacement direction of the gas generator (45) in a gastight manner and is guided at least via two stationary deflection points (52, 53) around the antechamber housing (48) to the cover (39) which lies at a distance in front of the antechamber housing (48), and is connected there, it being possible for the cable pull (49) to be deflected out of the original position by the gas generator movement which acts on it, in order to produce the opening force for the cover (39).

15. Steering apparatus according to one of Claims 1 to 14, **characterized in that** the gas generator (11, 28; 45) is a two-stage gas generator, it being possible for the pyrotechnic drive (14; 26; 38) to be actuated with the first generator stage after activation by a crash sensor, and for the airbag (12; 29; 47) to be inflated at a different time with the second generator stage.

16. Steering apparatus according to one of Claims 1 to 15, **characterized in that** the cover (9; 39) comprises at least one airbag flap (23, 24; 35, 36; 54, 55) which can be opened inwardly or outwardly in a pivoting manner.

17. Steering apparatus according to one of Claims 1 to 16, **characterized in that** the cover (9; 39) is formed by an outer skin which can be torn open at an initial notch (22; 34; 56).

18. Steering apparatus according to one of Claims 1 to 17, **characterized in that** the airbag (12; 29; 47) is directed towards the cover (9; 39) and the airbag module (10; 27; 44) is configured to be displaceable in its entirety.

19. Steering apparatus according to one of Claims 1 to 18, **characterized in that**, in the region of the steering wheel hub (3; 42) and/or the steering column (2; 41), a part region is formed as a deformation region, preferably in the manner of a corrugated profile (43) and/or turn-up tube (4).

## Revendications

1. Dispositif de direction pour un véhicule, notamment pour un véhicule automobile, comprenant un module d'airbag (10 ; 27 ; 44) qui présente une colonne de direction (2 ; 41) avec un moyeu de volant de direction (3 ; 42) du côté de l'extrémité, sur lequel est disposé le volant de direction (6), le moyen de volant de direction (3 ; 42) étant de préférence réalisé en forme de pot et comprenant une paroi de sortie (7) avec un recouvrement ouvrable (9 ; 39), derrière lequel le module d'airbag (10 ; 27 ; 44), qui comprend un générateur de gaz (11 ; 28 ; 45) et un airbag (12 ; 29 ; 47), est disposé, le recouvrement (9 ; 39), dans l'état activé du module d'airbag (10 ; 27 ; 44) libérant une ouverture de sortie d'airbag (8 ; 40) à travers laquelle l'airbag (12 ; 29 ; 47) peut être gonflé devant le volant de direction (6), **caractérisé en ce que** le recouvrement (9 ; 39) est accouplé à au moins un moyen de traction (18 ; 30, 31 ; 49), lequel peut être actionné au moyen d'un entraînement pyrotechnique (14 ; 26 ; 38), **en ce que** l'entraînement pyrotechnique (14 ; 26 ; 38) est réalisé sous forme d'unité cylindre-piston, dans laquelle le générateur de gaz (11 ; 28 ; 45) forme le piston qui est monté de manière à pouvoir se déplacer dans une région cylindrique (15 ; 33 ; 48) du moyeu de volant de direction (3 ; 42) et/ou de la colonne de direction (2 ; 41) servant de cylindre, d'une position de repos dans une position prête, **en ce qu'**en outre l'au moins un moyen de traction (18 ; 30, 31 ; 49) est connecté de manière indirecte et/ou directe au générateur de gaz (11 ; 28 ; 45) de telle sorte que dans le cas d'un décalage du générateur de gaz (11 ; 28 ; 45) dans la région cylindrique (15 ; 33 ; 48), une force de traction peut être exercée sur l'au moins un moyen de traction (18 ; 30, 31, 49) de telle sorte que le moyen de traction (18 ; 30, 31 ; 49) transfère le recouvrement (9 ; 39) de sa position de recouvrement dans sa position d'ouverture pour libérer l'ouverture de sortie d'airbag (8, 40), et **en ce que** le générateur de gaz (11 ; 28 ; 45), après son activation par le gaz qui en sort, est utilisé jusqu'à l'obtention de sa position prête uniquement pour son décalage et seulement ensuite pour gonfler l'airbag (12 ; 29 ; 47).

2. Dispositif de direction selon la revendication 1, **caractérisé en ce que** l'au moins un moyen de traction est formé par l'airbag (29) lui-même, qui est fixé avec au moins une région partielle d'airbag (30, 31) au recouvrement (9) de telle sorte que dans le cas d'un décalage du générateur de gaz (28) dans la région cylindrique (33), de préférence dans la direction s'éloignant du recouvrement (9), une force de traction puisse être appliquée sur l'au moins une région partielle d'airbag (30, 31), de telle sorte que celle-ci transfère le recouvrement (9) dans sa position d'ouverture, de préférence dans une région derrière la paroi de sortie, et qu'ensuite l'airbag (29) sorte à travers l'ouverture de sortie d'airbag (8) et puisse être gonflé.

3. Dispositif de direction selon la revendication 1, **caractérisé en ce que** le moyen de traction est un câble Bowden (18) qui est guidé par-dessus des points de déviation fixes (19, 20) tout autour du module d'airbag (10) jusqu'au recouvrement (9) de telle sorte que dans le cas d'un décalage du générateur de gaz (11) dans la région cylindrique (15), de préférence dans la direction s'éloignant du recouvrement (9), une force de traction puisse être appliquée sur le câble Bowden (18) de telle sorte que celui-ci transfère le recouvrement (9) dans sa position d'ouverture et qu'ensuite l'airbag (12) sorte à travers l'ouverture de sortie d'airbag (8) et puisse être gonflé.

4. Dispositif de direction selon la revendication 3, **caractérisé en ce qu'**à chaque fois des deux côtés d'une extrémité inférieure du générateur de gaz, on prévoit un premier point de déviation fixe (19) espacé de celle-ci, autour desquels le câble Bowden (18) est guidé avec une région partielle de telle sorte que cette région partielle s'étende approximativement horizontalement et soit disposée de préférence directement à côté de l'extrémité inférieure du générateur de gaz, les premiers points de déviation fixes (19) étant espacés l'un de l'autre de telle sorte que le générateur de gaz (11) puisse être décalé entre eux en entraînant le câble Bowden (18).

5. Dispositif de direction selon la revendication 4, **caractérisé en ce que** l'on associe aux premiers points de déviation fixes (19) un deuxième point de déviation fixe respectif (20), qui est décalé davantage vers l'extérieur par rapport à l'extrémité inférieure du générateur de gaz et se situe plus bas que le premier point de déviation fixe respectif (19), les deuxièmes points de déviation fixes (20) se trouvant de préférence à la même hauteur par rapport à l'extrémité inférieure du générateur de gaz, et **en ce que** le câble Bowden (18) est guidé en provenance des premiers points de déviation fixes (19) à chaque fois tout autour des deuxièmes points de déviation fixes (20) éventuellement sur d'autres points de déviation fixes dans la direction du recouvrement (9).

6. Dispositif de direction selon l'une quelconque des revendications 3 à 5, **caractérisé en ce que** le câble Bowden (18) est guidé avec une extrémité libre de câble respective des deux côtés du module d'airbag (10) vers le haut dans la direction du recouvrement (9) et y est fixé dans une région de bord du côté de l'extrémité, et **en ce que** dans le cas d'un décalage du générateur de gaz (11) dans la direction s'éloignant du recouvrement (9) entre les deux premiers points de déviation fixes (19) par entraînement du câble Bowden (18), une force de traction agit sur les deux extrémités du câble de telle sorte que celles-ci, avec à chaque fois une région partielle de recouvrement (23, 24) pour libérer l'ouverture de sortie d'airbag (8), puissent pivoter autour d'un appui pivotant fixe (21) vers l'extérieur dans la direction éloignée de la paroi de sortie (7).

7. Dispositif de direction selon l'une quelconque des revendications 3 à 6, **caractérisé en ce que** l'airbag (12) est reçu dans la position de repos dans un pot d'airbag séparé (13) et est fixé dans la région du moyeu de volant de direction (3) et/ou dans la région de la colonne de direction (2) à distance de celui-ci ou de celle-ci, de telle sorte que le câble Bowden (18) soit guidé dans la région entre le pot d'airbag (13) et une paroi du moyeu de volant de direction (3) et/ou de la colonne de direction (2).

8. Dispositif de direction selon la revendication 1, **caractérisé en ce que** le générateur de gaz (45) utilisé comme piston est monté de manière déplaçable dans la direction du recouvrement (39) dans un boîtier de préchambre (48) réalisé sous forme de région cylindrique, qui est connecté au moyeu de volant de direction (42) et/ou à la colonne de direction (41) ou est réalisé de manière intégrale à celui-ci ou celle-ci, de telle sorte que le générateur de gaz (45), après l'activation souffle par des ouvertures de sortie (46) dans le boîtier de préchambre (48) fermé de préférence de manière étanche aux gaz en face du recouvrement (39) et qu'il s'y établisse une pression de déplacement pour décaler le générateur de gaz (45) dans la position prête.

9. Dispositif de direction selon la revendication 8, **caractérisé en ce que** l'au moins un moyen de traction (49) est connecté au générateur de gaz (45) par le biais d'une inversion de la direction de traction de telle sorte que le recouvrement (39) puisse être déplacé approximativement dans le sens inverse derrière la paroi de sortie par le générateur de gaz (45) déplaçable dans la direction du recouvrement (39).

10. Dispositif de direction selon la revendication 8 ou 9, **caractérisé en ce que** l'airbag (47) peut être gonflé avec l'activation du générateur de gaz (45), de préférence seulement dans la position prête décalée du générateur de gaz (45), par le biais d'une connexion de gaz.

11. Dispositif de direction selon l'une quelconque des revendications 8 à 10, **caractérisé en ce que** l'on prévoit sur le boîtier de préchambre (48) dans la trajectoire de déplacement du générateur de gaz (45), de préférence dans la région de la position prête décalée du générateur de gaz (45); au moins une ouverture de débordement (57, 58), et qu'après un transfert de l'ouverture de débordement (57, 58) à travers le générateur de gaz (45), une connexion de gaz à l'airbag (47) est créée.

12. Dispositif de direction selon l'une quelconque des revendications 8 à 11, **caractérisé en ce que** le générateur de gaz (45) présente des ouvertures de gonflage radiales (46).

13. Dispositif de direction selon l'une quelconque des revendications 8 à 12, **caractérisé en ce que** le générateur de gaz décalable (45) et/ou le module d'airbag décalable (44) est guidé de manière étanche aux gaz dans le boîtier de préchambre (48) le long de la trajectoire de déplacement au moyen d'au moins un élément d'étanchéité (59).

14. Dispositif de direction selon l'une quelconque des revendications 8 à 13, **caractérisé en ce que** le moyen de traction est au moins un câble Bowden (49) qui est guidé depuis le générateur de gaz (45) de manière étanche aux gaz hors du boîtier de préchambre (48) à l'encontre du sens de décalage du générateur de gaz (45) et est guidé au moins par le biais de deux points de déviation fixes (52, 53) tout autour du boîtier de préchambre (48) vers le recouvrement (39) se trouvant à une certaine distance devant le boîtier de préchambre (48) et y est connecté, le câble Bowden (49) pouvant être dévié par le mouvement du générateur de gaz venant en prise avec lui depuis la position initiale pour produire la force d'ouverture pour le recouvrement (39).

15. Dispositif de direction selon l'une quelconque des revendications 1 à 14, **caractérisé en ce que** le générateur de gaz (11, 28 ; 45) est un générateur de gaz à deux étages, dans lequel, après l'activation par un détecteur de collision, l'entraînement pyrotechnique (14 ; 26 ; 38) peut être activé par le premier étage du générateur et l'airbag (12 ; 29 ; 47) peut être gonflé avec un retard dans le temps avec le deuxième étage du générateur.

16. Dispositif de direction selon l'une quelconque des revendications 1 à 15, **caractérisé en ce que** le recouvrement (9 ; 39) se compose d'au moins un volet d'airbag pivotant (23, 24 ; 35, 36 ; 54, 55) pouvant être ouvert vers l'intérieur ou vers l'extérieur.

17. Dispositif de direction selon l'une quelconque des revendications 1 à 16, **caractérisé en ce que** le recouvrement (9 ; 39) est formé par une peau extérieure pouvant être déchirée au niveau d'un pré-entaillage (22 ; 34 ; 56).

18. Dispositif de direction selon l'une quelconque des revendications 1 à 17, **caractérisé en ce que** l'airbag (12 ; 29 ; 47) est orienté vers le recouvrement (9 ; 39) et le module d'airbag (10 ; 27 ; 44) est réalisé de manière décalable dans son ensemble.

19. Dispositif de direction selon l'une quelconque des revendications 1 à 18, **caractérisé en ce que** dans la région du moyeu de volant de direction (3 ; 42) et/ou de la colonne de direction (2 ; 41), une région partielle est réalisée sous forme de région de déformation, de préférence à la manière d'un profilé ondulé (43) et/ou d'un tube embouti (4).
